# EUROPEAN PATENT APPLICATION

(11) **EP 1 341 090 A1**
(43) Date of publication of application: **03.09.2003**
(21) Application number: 01998896.3
(22) Date of filing: 29.11.2001
(51) Int. Cl.: G06F 13/00

(54) **SERVER DEVICE AND INFORMATION PROCESSING DEVICE**

(30) Priority: 01.12.2000 JP 2000366758
(71) Applicant: MATSUSHITA ELECTRIC INDUSTRIAL CO., LTD., Kadoma-shi, Osaka 571-8501 (JP)
(72) Inventor: KOBAYAKAWA, Yuichi, Ota-ku, Tokyo 144-0046 (JP); SAKATA, Tsuyoshi, Asahi-ku, Yokohama-shi, Kanagawa 241-081 (JP); ITO, Masao, Takatsu-ku, Kawasaki-shi, Kanagawa 213-0 (JP); MINEMURA, Atsushi, Itabashi-ku, Tokyo 174-0074 (JP); MATSUURA, Shun, Suginami-ku, Tokyo 166-0014 (JP)
(74) Representative: Betten & Resch
(86) International application number: JP0110434
(87) International publication number: WO02044909

(57) **Abstract**

The purpose of the server device and information processing device is to easily establish the most appropriate communications based on the unique information of the user. The server device (0203) has a section to receive the unique information that receives the unique information of the user (0210) and a section to manage the information about establishing communications that manages the information about establishing communications (0211), etc. The information processing device (0201) has a section to transmit the unique information (0204) that transmits the unique information and an information receiving section (0205) to receive the information about establishing communications, etc.

## Description

### Field of the Invention

The present invention relates to an information processing device connected to the Internet via phone lines or a fiber-optic cable or the like, and a server device that transmits information about establishing communications for a user to the information processing device based on the user information transmitted from the information processing device.

### Background of the Invention

A home terminal, such as a Set-Top Box (STB) that receives satellite digital broadcasting, cable television (CATV) broadcasting, and the like, can perform two-way communications using phone lines and the like and by connecting to the Internet, or by connecting with broadcasting stations.

When a user intends to use the Internet, such user is required to perform the operation of the home terminal in accordance with the prescribed procedures, in order to connect with the server device of the provider with which such user has contracted. However, in many cases, a user, such as an older adult who is unskilled at operating electronic devices, conducts operations repeatedly until the completion of establishing the connection, since the process of establishing the connection is complicated. Additionally, due to the reason given above, some vendors who have sold the home terminal or a digital television must provide services for the operation for establishing the connection for the user.

The purpose of present invention is to a provide server device and an information processing device that allow the user to easily perform the operation for establishing the connection described above.

### Disclosure of the Invention

A server device according to an example of the present invention comprises a receiving section for unique information that receives the unique information on the terminal side, a management section for the information about establishing communications, an information obtaining section to acquire the information about establishing communications from a management section for the information about establishing communications wherein the unique information is used as a key, and an information transmitting section to transmit the information about establishing communications obtained at the information obtaining section.

The information processing device according to an example of the present invention is connected to the server device. Additionally, it is equipped with a unique information transmitting section to transmit the unique information, an information receiving section to receive the information about establishing communications, and an information recording section to record the information about establishing communications received at the information receiving section.

### BRIEF DESCRIPTION OF THE DRAWINGS

Fig. 1 is a diagram of the outline of communications by the server device and information processing device according to an example of the present invention.
Fig. 2 is a functional block diagram of an embodiment of the server device and information processing device according to an example of the present invention.
Fig. 3 is a diagram of an example of menu regarding the information about establishing communications.
Fig. 4 is a flow chart of the process followed by the information processing device.
Fig. 5 is a flow chart of the process followed by the server device.
Fig. 6 is a diagram of an example of management of the information about establishing communications.
Fig. 7 is a diagram of another example of management of the information about establishing communications.
Fig. 8 is a diagram to show an example of a top page.

### DETAILED DESCRIPTION OF EXAMPLES OF THE INVENTION

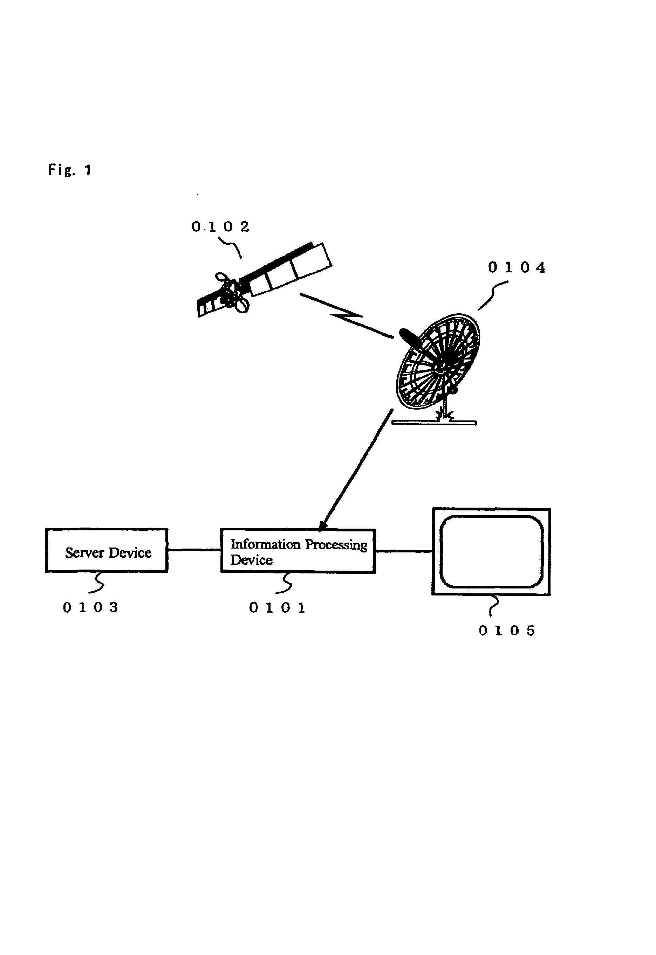

Examples of the invention are described based on the figures hereinafter. First, the outline of the communications using the server device and the information processing device relating to an example of the present invention is explained. As shown in Fig. 1, the information processing device placed on the user's side (0101) receives the broadcast from the satellite (0102) via a parabola antenna (0104) for example, and also performs two-way communications by connecting to the server device (0103) of the Internet provider or the broadcasting stations through the phone line, etc. Additionally, the received broadcasts are output by a television set (0105).

As mentioned above, the information processing device (0101) receives the broadcast and also performs two-way communications by connecting to the Internet provider or the server device of the broadcasting stations, which is equivalent to the home terminal, such as a Set-Top Box (STB).

Additionally, the received broadcasts are not only satellite broadcasts but also terrestrial broadcasts and cable television (CATV) and the like. It is a matter of course to include various types of broadcasts.

The purpose of the server device is to provide a service to supply information to the user on the network, which includes various matters, such as Web Server and File Server. Additionally, the connection of the information processing device (0101) may be via either wired or wireless connections.

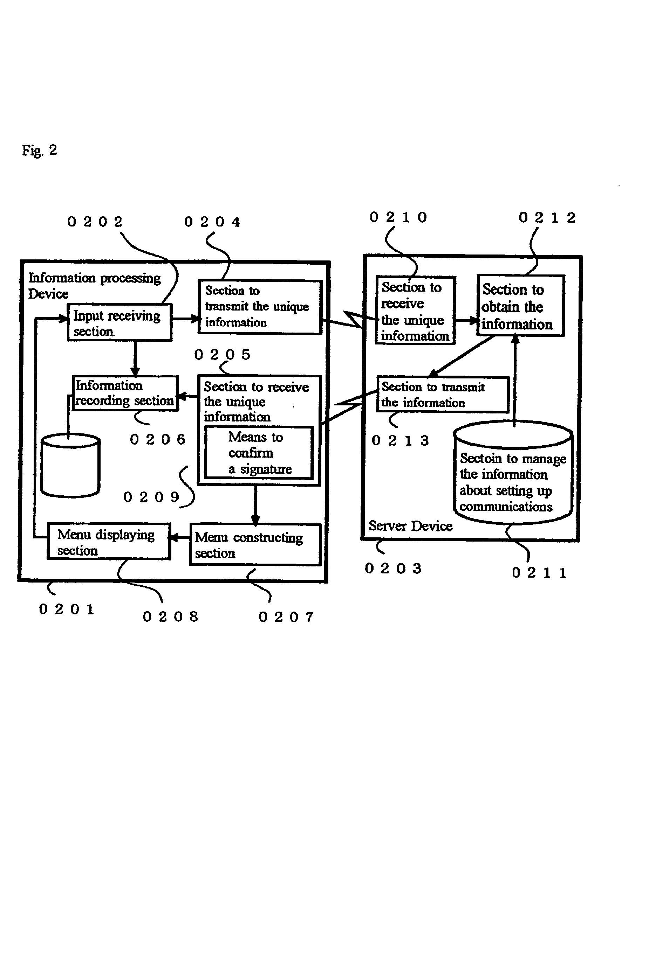

Second, the specific configurations of the information processing device and the server device are explained. As shown in Fig. 2, first, the information processing device (0201) is equipped with an input receiving section to receive the input from the user (0202), a section to transmit the unique information (0204) that transmits the unique information of user input at the input receiving section (0202) to the server device (0203), an information receiving section (0205) to receive the information about establishing communications transmitted by the server device (0203), an information recording section to record the information about establishing communications (0206) received at the information receiving section (0205), a menu constructing section (0207) to create the menu of the information about establishing communications when the information about establishing communications received at the information receiving section (0205) is multiple, and a menu indication section to display the menu (0208) created at the menu constructing section (0207).

The unique information is the personal information that specifies the user. More specifically, such information typically includes information specifying the address of the user or an area where such address is, or, in addition to the information about the area code number and local code number of the phone in the area, information about age, gender, family structure, occupation, hobbies of the user, and the like, or information about the contract of a specific discount service for telephone fees or the like to which the user subscribes, as well.

Additionally, the information specifying the information processing device (0201) may be added to the unique information. Specifically, this typically includes the serial number, the manufacturer's identification number, the model identification number, and the MAC address of the information processing device (0201) and the like.

The information about establishing communications is information to indicate a party to which communications are connected, such as a phone number, an IP address, or a URL for the user to connect the server device (0203).

The purpose of the input receiving section (0202) is to receive the unique information input by the user, and to receive selections and instructions when the user selects one piece of information about establishing communications from among multiple pieces of such information which is displayed by the menu displaying section (0208).

The section to transmit the unique information (0204) has the function to transmit the unique information via wired or wireless connections. This is equivalent to a modem or driver, etc. when transmission is made via a phone line, for example.

The information receiving section (0205) receives a phone number, an IP address, and the like showing the party to which communications are connected, etc. by the server device (0203). Based on the information about establishing communications, such section has the function of either causing the information recording section (0206) to directly record the information about establishing communications or causing the menu constructing section (0207) to create a menu regarding such information.

Additionally, the information receiving section (0205) has a means to confirm a signature (0209) to confirm a signature of the server device (0203), receives the only information about establishing communications attached with such signature, and does not receive unauthorized information about establishing communications which has been transmitted.

The purpose of a signature is to indicate that the information about establishing communications comes from the authorized server device (0203). Confirming a signature is as follows.

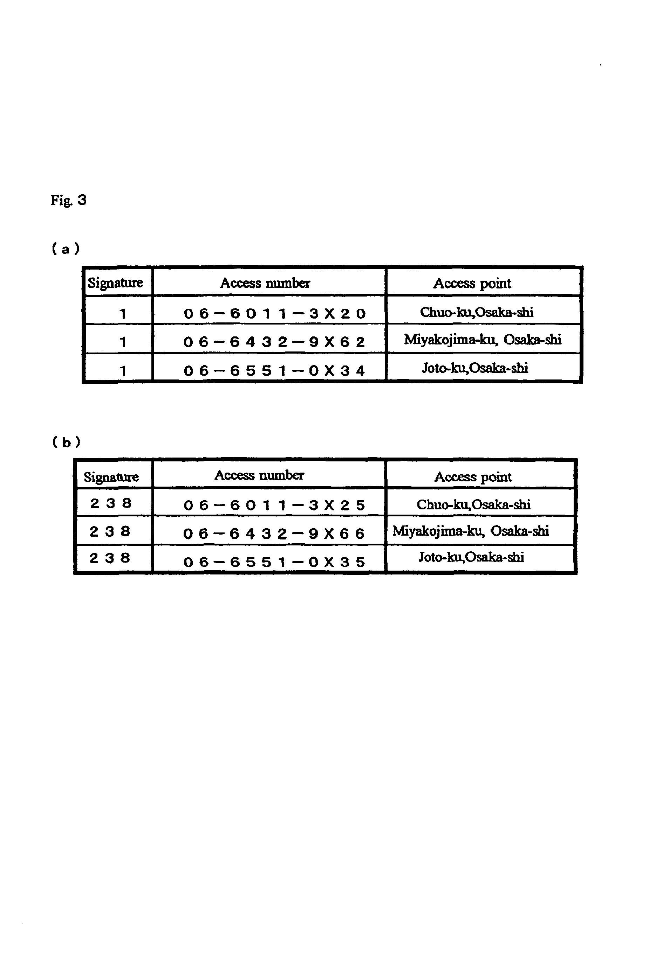

As shown in Fig. 3 (a), for example, when an access number and an access point are transmitted from the server device (0203) as information about establishing communications in case of a dial-up connection, when bit "1" is being set as the signature preceding such information, such information will be received as information about establishing communications from the authorized server device (0203). Additionally, for example, as indicated in Fig. 3 (b), the information processing device (0201) has No. 238 as the server ID, and when the server ID of No. 238 is attached proceeding the transmitted information about establishing communications as a signature, such information will be received as the information about establishing communications from the authorized server device (0203).

Also, for another example of issuing a signature, there is a case where a signature is issued by using the digest function and the like of a whole or part of the information about establishing communications.

However, the means to confirm a signature (0209) is not essential, and may be omitted in cases where there is no possibility of unauthorized information about establishing communications to be intervened, for example.

The information recording section (0206) is a recording medium (HD, CD-ROM, DVD-RAM, or the like) that records the information about establishing communications, and allows the information processing device (0201) and the server device (0203) to make constant two-way communications.

When the information about establishing communications corresponds to the telephone numbers for a dial-up connection and is multiple, the menu constructing section (0207) creates a menu relating to a convenient access point for the user and such telephone numbers. Specifically, when the user transmits the unique information regarding "Osaka" or "06" for area code number, as shown in Fig. 3, a menu that is composed of the access points of Chuo-ku, Miyakojima-ku, and Joto-ku within Osaka-shi and the numbers starting with the telephone numbers "06" is created.

In addition, the menu constructing section (0207) is not provided in such information processing device (0201), and may be provided in the server device (0203). In such case, a menu that is constructed at the server device (0203) is transmitted to the information processing device (0201), and is displayed at the menu displaying section (0208) described hereinafter.

When a menu of the information about establishing communications is created at the menu constructing section (0207), the menu displaying section (0208) automatically displays such menu. However this section is not required to have a display, and the section that performs display instructions on an external display is also included.

In addition, in an example of the present invention, the input receiving section (0202) at the information processing device (0201) is not a required element. For example, it may be acceptable that the unique information of the user is input at the information processing device (0201) in advance, or the area where the user lives is input automatically as the unique information by receiving the broadcast by a tuner. Additionally, the menu constructing section (0207), and the menu displaying section (0208) are not required elements. For example, when one piece of information about establishing communications is transmitted to such information processing device (0201), such sections may be omitted.

The server device (0203) is equipped with a section to receive the unique information of the user (0210), transmitted from the section to transmit the unique information (0204) of the information processing device (0201), a section to manage the information about establishing communications (0211), a section to obtain information (0212) that obtains information about establishing communications from the section to manage the information about establishing communications (0211) wherein the unique information is used as a key, and a section to transmit information (0213) that transmits information about establishing communications obtained at the section to obtain the information (0212) to the information receiving section (0205) of the information processing device (0201).

Specifically, the section to receive the unique information (0210) receives personal information such as user address or the area code number and local code number of the phone at such address.

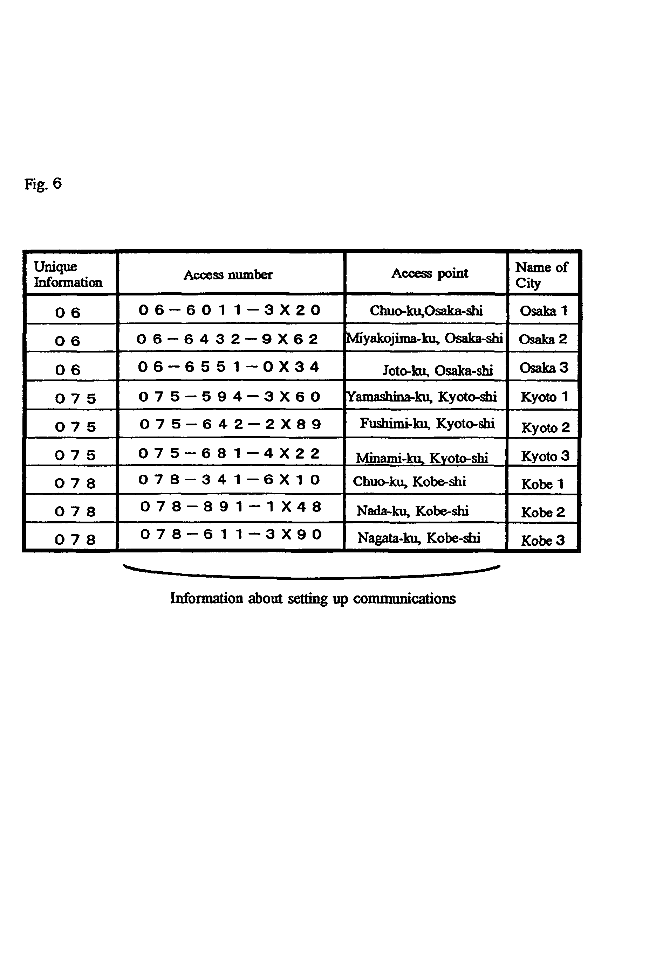

At the section to manage the information about establishing communications (0211), the information about establishing communications, such as multiple phone numbers or IP addresses so as to connect such server device (0203) has been accumulated in advance. For example, as shown in Fig. 6, as for the area code of the area for"06,""075," or "078," etc. as unique information for the user, the access numbers that have the corresponding numbers of 06-6011-3X20, 075-981-2X56, 078-344-2X52, and the access points of Chuo-ku in Osaka-shi, Fushimi-ku in Kyoto-shi, Higashinada-ku in Kobe-shi and the like are managed as the information for communications. And regarding information other than the information about establishing communications, names of each city for the said access points, such as Osaka 1, Kyoto 1, or Kobe 1 are also managed.

The section to obtain the information (0212) has a function to search and obtain one or more pieces of information about establishing communications that is appropriate for the communications for the individual user among the information about establishing communications accumulated at the section to manage the information about establishing communications (0211), wherein the unique information of the user that has been received at the section to receive the unique information (0210) is used as a key.

Searching for the information about establishing communications may be searching for the information fulfilling the conditions of partial overlap, in addition to complete matches. Here, as an example of partial overlap, when the unique information for the user is, for example, a phone number starting with an area code "03" in the Tokyo area, the area code of access points having the number starting with the area code "03" is searched in a singular or multiple way as the information about establishing communications. Additionally, when the unique information for the user, for example, is a phone number indicated by 3 xxx-xxxx after the area code of "03" in the Tokyo area, the area code of the access point that is "03-3xxx-xxxx" may be searched.

The section to transmit the information (0213) transmits the information about establishing communications obtained at the section to obtain the information (0212) to the information establishing section (0205) of the information processing device (0201). Specifically, such section is equivalent to a modem, driver, or the like

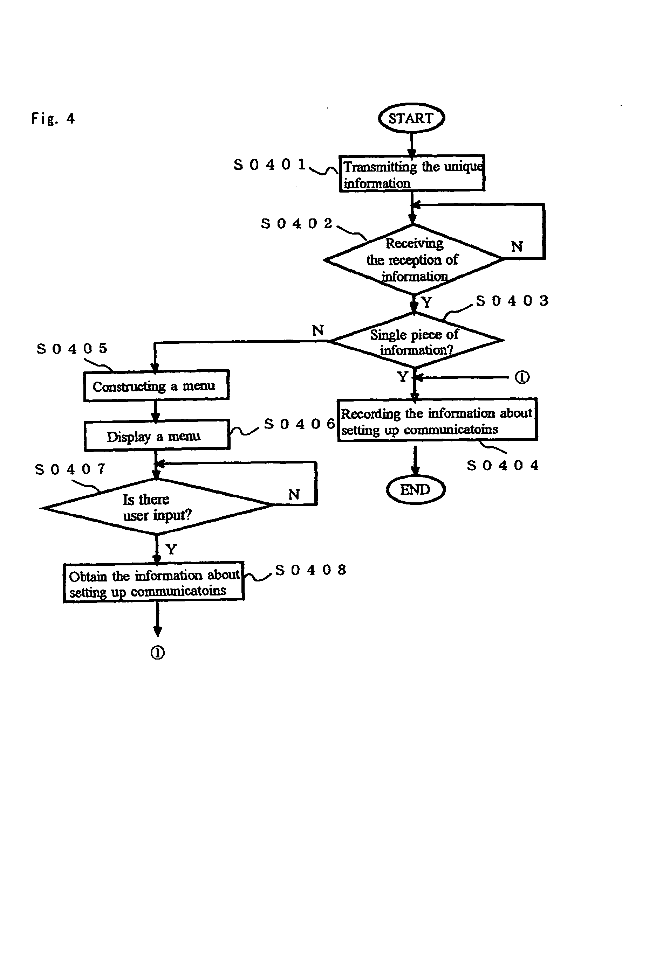

Next, the flow of processes in the information processing device and server device is explained. As shown in Fig. 4, first of all, the information processing device transmits the unique information for the user to the server device (Step S0401). Specifically, areas of the prefecture, the city, the town, and the village of the user and the like, or area code numbers of the phones in the areas when a dial-up connection is made, are applied thereto. For example, when a user lives in Osaka, the area of "Osaka" or "06" of the area code number of Osaka is transmitted. Next, receiving the information about establishing communications from the server device is performed (Step S0402). When the information about establishing communications is received, it is determined whether such information is singular or plural (Step S0403). When such information is singular, information about establishing communications is recorded (Step S0404), and the process is complete. On the other hand, when such information is plural, menus are constructed (Step S0405) therefor, and the constructed menus are displayed (Step S0406). Specifically, as described above, the phone numbers of the multiple access points starting with 06 shown in Fig. 3 are displayed from the server device (information about setting up communications) by transmitting the unique information of "Osaka" or "06" by the user. The user selects and inputs one of the phone numbers in the displayed menus (Step S0407), one phone number is obtained in accordance with such input (Step S0408), this is recorded (Step S0404), and the process is complete.

Additionally, in the process, when there is unique information regarding a dialing code corresponding with a discount service for phone fees received by the user, for example, the phone number that is targeted for the discount service as a phone number of the access point is priorized as information about establishing communications. In more detail, for example, concerning a specific dialing code designated by the user, etc. when a phone company provides a service that makes the phone charges of the phone number having such dialing code a certain amount, and the user has joined such service, if there is an access point having the specific dialing code, etc. designated by such user, such number is prioritized as information about establishing communications.

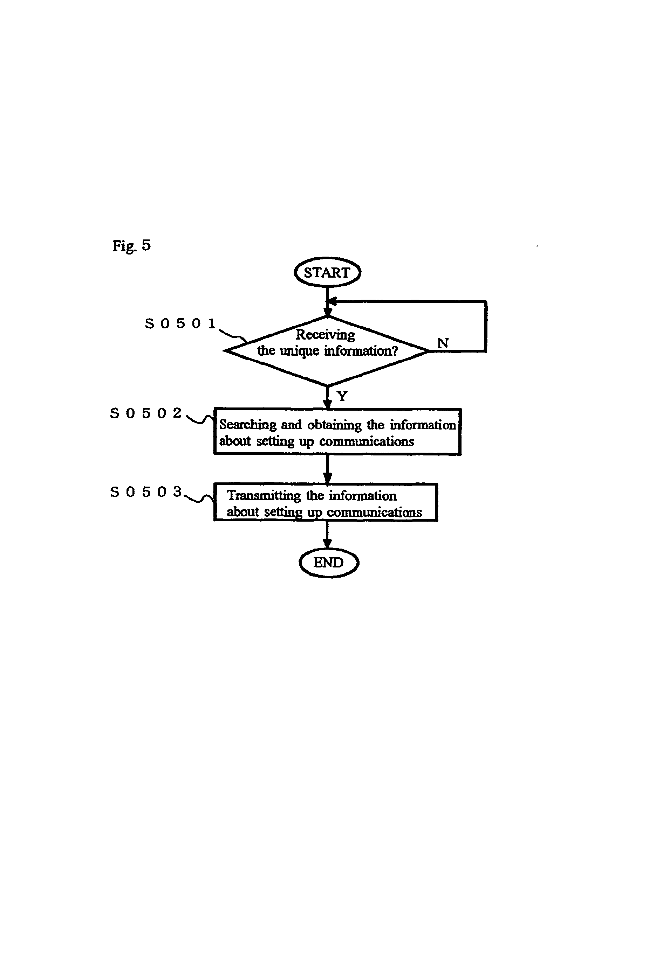

As shown in Fig. 5, the server device receives the unique information transmitted from the user (Step 0501). When such information is received, such device searches for and obtains singular or multiple information about establishing communications appropriate for the user based on the unique information as a key (Step S0502), such information is transmitted to the information processing device of the user (Step S0503), and the process is complete.

In the embodiment, as for the unique information for the user, regional information such as user address or the area code number of the phone corresponding with such address is used, and the number for an appropriate dial-up connection for such regional information is indicated to the user. However, the present information is not restricted to information based on such regional information as a matter of course.

Specifically, for example, when the information relating to the user's hobbies is used as the unique information for the user, the information relating to user' s hobbies is transmitted from the information processing device (0201) to the server device (0203). Based on the received information relating to the hobbies (unique information), the URL of the top page of a site dealing with the genre corresponding therewith is searched for as information about establishing communications in the server device (0203). Such information is transmitted to the information processing device (0201), and such information processing device (0201) is connected to the top page.

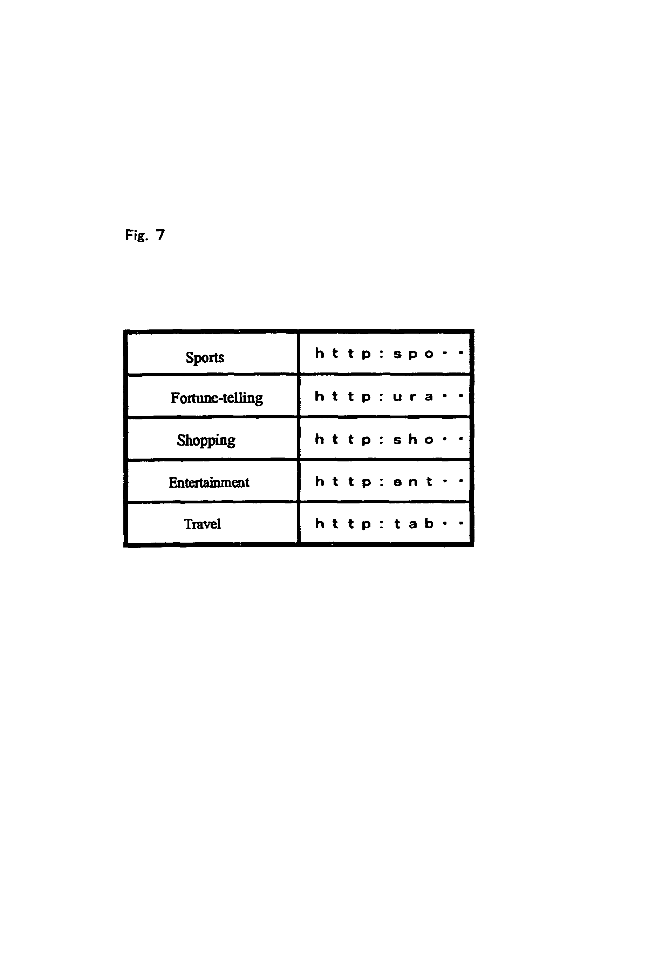

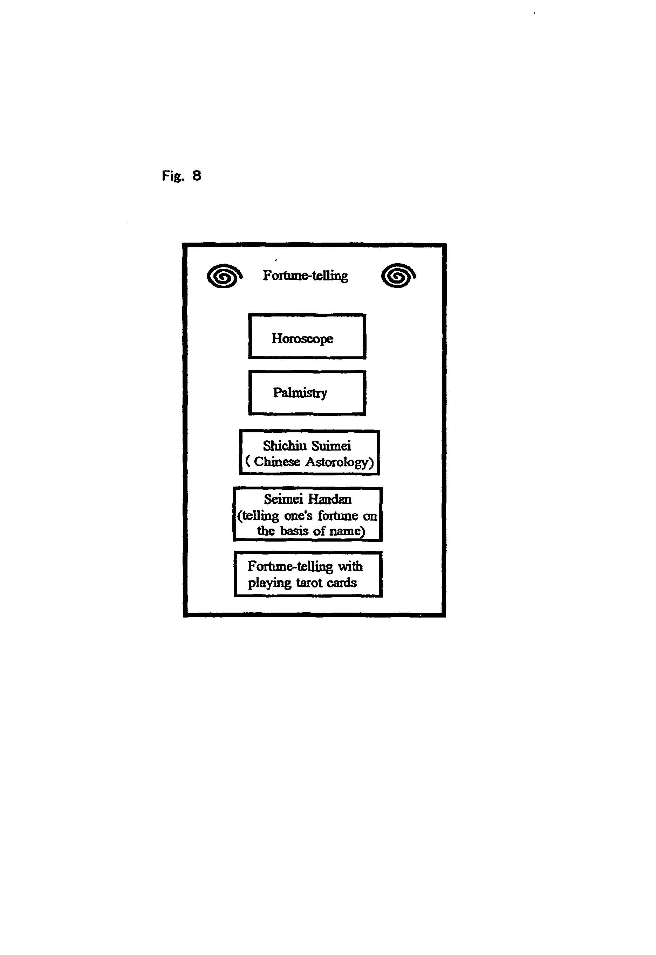

In more detail, as shown in Fig. 7, the genres of sports, fortune-telling, shopping, entertainment, travel, and the like, and the URLs of the top pages of sites relating to such genres are managed in pairs in the section to manage the information about establishing communications (0211) of the server device (0203). For example, as for the genre of fortune-telling, the URL of the top page where various fortune-telling patterns can be performed as shown in Fig. 8 is managed.

In addition, the embodiment is related to the device. However, the aforementioned operations performed by the device are realized by a computer program, which may be recorded in a medium such as CD-ROM, floppy disk, or the like, or the program may be downloaded via the Internet.

The server device and information processing device related to this invention are useful for the Internet broadcasting, the satellite digital broadcasting, the CATV, and the like. Based on this invention, it is possible for the user who is not good at the operation of electronic appliances to easily establish communications on their own, as the user simply transmits the unique information thereof to the server, which allows the user to obtain the appropriate information about establishing communications and to easily establish constant communications.

## Claims

1. A server device comprising:
an information receiving section to receive unique information on a terminal side;
a management section for information for establishing communications;
an information obtaining section to acquire the information about establishing communications from a management section wherein said unique information is used as a key; and
an information transmitting section to transmit information about establishing communications obtained at said information obtaining section.

2. An information processing device connected to the server device described in claim 1 comprising:
an information transmitting section to transmit unique information;
an information receiving section to receive information about establishing communications; and
an information recording section to record the information about establishing communications received at said information receiving section.

3. The information processing device described in claim 2 wherein said information receiving section has a means to confirm a signature to confirm an existence of a signature of the server device, and which receives only information about establishing communications with a signature attached.

4. The information processing device described in claim 2 or 3 further comprising an input receiving section to input said unique information.

5. A method for providing the information about establishing communications comprising the steps of:
receiving the unique information on the terminal side; acquiring information about establishing communications wherein said unique information is used as a key; and
transmitting the acquired information about setting up communications.

6. A method for establishing communications comprising the steps of:
transmitting unique information;
receiving information about establishing communications wherein said unique information is used as a key; and
recording the received information about establishing communications.

7. A recording medium readable by a computer that records a program to execute a step to transmit the unique information, a step to receive the information about establishing communications wherein said unique information is used as a key, and a step to record the received information about establishing communications.

8. A program to execute a step to transmit the unique information, a step to receive the information about establishing communications wherein said unique information is used as a key, and a step to record the received information about establishing communications.
